**Europäisches Patentamt**

(19) **European Patent Office**

**Office européen des brevets**

(11) Veröffentlichungsnummer: **0 222 147**
**B1**

(12) # EUROPÄISCHE PATENTSCHRIFT

(45) Veröffentlichungstag der Patentschrift:
**16.08.89**

(51) Int. Cl.⁴: **B23Q 3/10**

(21) Anmeldenummer: **86113809.7**

(22) Anmeldetag: **06.10.86**

(54) **System zum Aufbau von Vorrichtungen zum Aufspannen von Werkstücken.**

(30) Priorität: **13.11.85 DE 3540221**

(43) Veröffentlichungstag der Anmeldung:
**20.05.87 Patentblatt 87/21**

(45) Bekanntmachung des Hinweises auf die Patenterteilung:
**16.08.89 Patentblatt 89/33**

(84) Benannte Vertragsstaaten:
**AT BE CH DE ES FR GB IT LI NL SE**

(56) Entgegenhaltungen:
**FR-A- 2 335 303**
**US-A- 3 229 365**

(73) Patentinhaber: **Horst Witte Entwicklungs- und Vertriebs-KG, D-2122 Bleckede(DE)**

(72) Erfinder: **Witte, Horst, Auf dem Deich Nr. 2, D-2122 Bleckede(DE)**

(74) Vertreter: **von Raffay, Vincenz, Dipl.-Ing. et al, Patentanwälte Raffay, Fleck & Partner Postfach 32 32 17, D-2000 Hamburg 13(DE)**

ACTORUM AG

**Beschreibung**

Die Erfindung betrifft ein System nach dem Oberbegriff des Patentanspruches I.

Bei einem bekannten System der vorstehend genannten Art (DE-PS 2 626 l55) befinden sich Abschnitte größeren Durchmessers auf der Unterseite der Grundplatte und zwar zur Aufnahme der Mutternteile, in die die Paßschrauben eingeschraubt werden. Hierdurch ist eine Befestigung von Aufnahmeteilen nur auf einer Seite, d.h. auf der Oberseite der Grundplatte möglich.

Der Erfindung liegt nun die Aufgabe zugrunde, ein System der eingangs genannten Art zu schaffen, das dadurch vielseitiger verwendbar ist, daß zumindest an die an die Grundplattenoberseite angrenzenden Grundplattenseitenflächen ebenfalls Aufnahmeteile ansetzbar sind.

Diese Aufgabe wird durch das Kennzeichen des Anspruches I gelöst.

Die Erfindung macht grundsätzlich von einem quaderförmigen Grundelement Gebrauch, wie es aus der US-PS 3,229,365 bekannt ist. Dieses bekannte Grundelement weist aber lediglich sich kreuzende Bohrungen zur Aufnahme von Befestigungsschrauben auf. Für die Schraubenköpfe oder Muttern sind wiederum Abschnitte größeren Durchmessers an den Enden vorgesehen. Durch die Erfindung ist es möglich, die Mutternteile jeder einzelnen Paß- bzw. Querbohrung zuzuordnen, d.h. dort in die entsprechende Bohrung einzustecken, wo eine Befestigung erfolgen soll. Hierdurch ist es möglich, die Aufnahmeteile an sämtlichen Seiten zu befestigen und die Mutternteile in den Bohrungen selbst angrenzend an die entsprechenden Aufnahmeteile anzuordnen. Zusätzlich ist es problemlos möglich, evtl. beschädigte Mutternteile zu ersetzen. Ebenso ist es möglich, für ein und dieselbe Grundplatte Paßschrauben und Mutternteile mit anderen Gewinden, d.h. nach anderen Normen, einzusetzen.

Bedingt durch die Übereinstimmung der Durchmesser von Quer- und Paßbohrungen, können die Gewindeteile in beide Bohrungen eingesteckt werden, d.h. dort, wo sie zur Befestigung eines entsprechend angeordneten Aufnahmeteiles erforderlich sind.

In vorteilhafter Weise wird die universelle Einsetzbarkeit durch die sich kreuzenden Bohrungen nach Anspruch 2 noch erhöht.

Wenn die Ausbildung so erfolgt, wie in Anspruch 3 angegeben, dann ist eine besonders universelle Verwendbarkeit möglich. Es ergeben sich sehr viele Kombinationsmöglichkeiten zwischen Grundplatte und Aufnahmeteilen, wobei die Aufnahmeteile praktisch "kleine Grundplatten" sind. Die Vielfalt der bei bekannten Systemen erforderlichen Aufbauteile entfällt, weil mit entsprechend gut gestuften Rechteck- und Quadratformaten jeder Winkel und jeder Würfelaufbau montiert werden kann.

Die Querbohrungen, die im wesentlichen in der neutralen Zone verlaufen, machen das gesamte System, d.h. die Grundplatte und die entsprechend ausgebildeten Aufnahmeteile leicht.

Die Paßbohrungen sind normalerweise Durchgangsbohrungen, so daß beide Seiten als Aufspannfläche verwendet werden können.

Weitere vorteilhafte Ausgestaltungen sind Gegenstand zusätzlicher Unteransprüche.

Im folgenden wird die Erfindung unter Hinweis auf die Zeichnungen anhand eines Ausführungsbeispieles näher erläutert.

Es zeigt:

Fig. I die Draufsicht auf eine Grundplatte zu Verwendung in dem System nach der Erfindung ohne Aufnahmeteile;

Fig. 2 eine Seitenansicht der Grundplatte nach Fig. I;

Fig. 3 einen Schnitt gemäß der Linie C-D der Fig. I;

Fig. 4 eine Seitenansicht einer Grundplatte mit seitlich angesetztem Aufnahmeteil, das nach dem gleichen Prinzip wie die Grundplatte aufgebaut ist;

Fig. 5 eine Seitenansicht eines Widerlagers im vergrößerten Maßstab;

Fig. 6 eine Seitenansicht eines Mutternteils im vergrößerten Maßstab;

Fig. 7 einen Schnitt gemäß der Linie A-B der Fig. 4; und

Fig. 8 eine Seitenansicht der Darstellung der Fig. 4.

In der in der Zeichnung dargestellten Grundplatte I sind eine Anzahl von Paßbohrungen 5 als Durchgangsbohrungen ausgebildet. Vier benachbarte Paßbohrungen bilden ein Quadrat und legen dadurch das entsprechende Raster fest. In der Ebene senkrecht zu den Paßbohrungen 5 verlaufen sich kreuzende Querbohrungen 6 auf den entsprechenden Mittellinien durch nebeneinanderliegende Paßbohrungen. Die Durchmesser der Querbohrungen und der Paßbohrungen sind gleich, wobei lediglich die Aus- und Eingänge der Querbohrungen 6 angrenzend an die Seiten der Grundplatte I Passungen aufweisen, die denjenigen der Paßbohrungen entsprechen. Die Querbohrungen sind praktisch in der neutralen Zone vorgesehen, so daß sie die Grundplatte nicht wesentlich schwächen. Die Grundplatte wird durch die Querbohrungen sehr leicht.

In den Querbohrungen und in den Paßbohrungen können Mutternteile 3 und Widerlager 2 angeordnet werden, deren Querschnitt dem Querschnitt der Quer- und Paßbohrungen entspricht. Die Mutternteile 3 weisen ein Gewinde 9 für die Paßschrauben auf. Die Widerlager 2 weisen eine Durchgangsbohrung 7 und eine Ansenkung 8 für den Kopf der Paßschraube auf.

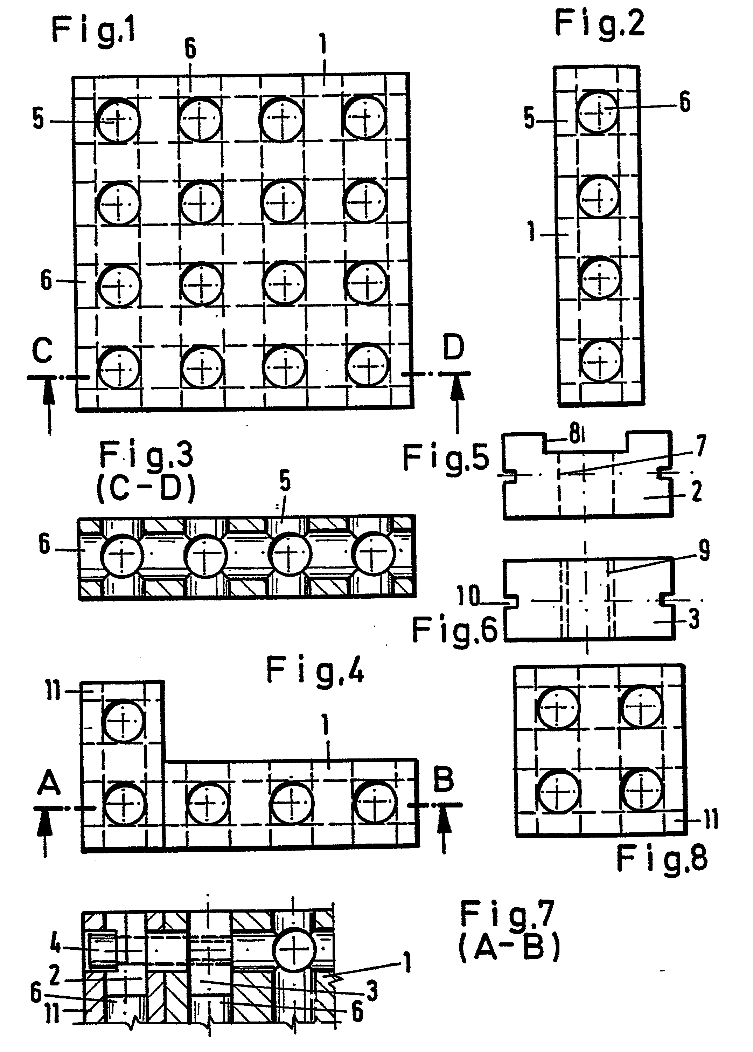

In den Fig. 4, 7 und 8 ist ein Aufnahmeteil II, verbunden mit einer Grundplatte I dargestellt, wobei das Aufnahmeteil II nach dem gleichen Prinzip wir die Grundplatte I mit Paßbohrungen und Querbohrungen versehen ist. Bei dieser Ausführungsform erfolgt die Befestigung, wie sich aus Fig. 7 ergibt, mit Hilfe einer Paßschraube 4, deren Schraubenkopf sich in einem Widerlager 2 abstützt und in das Gewinde 9 eines Mutternteils 3 eingeschraubt ist, das in der "zweiten" Querbohrung 6 liegt.

Die Mutternteile 3 und die Widerlager 2 sind mit Aufnahmen für ein Werkzeug versehen, so daß sie in den Quer- und Paßbohrungen verschoben und positioniert werden können. Sie können auch mit entsprechenden Zwangshemmungen durch Gummiringe, Federn oder dergl. versehen sein, damit sie möglichst leicht dort positioniert werden können, wo es erwünscht ist, d.h. daß eine Paßschraube nach dem Einführen auf ein entsprechendes Gewinde trifft.

Es ist leicht ersichtlich, daß sehr viele Kombinationsmöglichkeiten mit wenigen Bauteilen bestehen. Dies gilt insbesondere für den Fall, daß die Aufnahmeteile II nach dem gleichen Prinzip ausgebildet sind. Sie können seitlich an der Grundplatte I befestigt werden; dann wird das entsprechende Mutternteil in eine Paßbohrung eingesteckt. Wenn die Befestigung der Aufnahmeteile auf der großen Aufspannfläche der Grundplatte erfolgen soll, werden die Mutternteile in die Querbohrungen eingesteckt.

Da das Rastermaß, d.h. der Abstand der Paßbohrungen und damit auch der Querbohrungen, z.B. 40 mm, der Plattendicke entspricht, und die Außenabmessungen durch das Rastermaß teilbar sind, ergeben sich in Verbindung mit den Quer- und Paßbohrungen, die in allen drei Koordinatenrichtungen durch die Grundplatte und die Aufnahmeteile verlaufen, vielfältige Kombinationsmöglichkeiten, die noch dadurch erhöht werden können, wenn die Durchmesser der Quer- und Paßbohrungen gleich dem halben Rastermaß sind.

## Patentansprüche

I. System zum Aufbau von Vorrichtungen zum Aufspannen von Werkstücken auf Werkzeugmaschinentischen in definierter und reproduzierbarer Lage, mit einer auf den Maschinentisch aufsetzbaren Grundplatte (1), die in regelmäßigen Koordinatenabständen angeordnete Paßbohrungen (5) zur Befestigung von Aufnahmeteilen (11) für die Werkstücke mit Hilfe von Paßschrauben (4) und diese aufnehmende Mutternteile (3) aufweist, wobei die Aufnahmeteile mit in den gleichen Koordinatenabständen wie die Grundplatte angeordneten Paßbohrungen versehen und mittels der Paßschrauben in diesen positionierbar sind, dadurch gekennzeichnet, daß in der Grundplatte (I) in einer Ebene senkrecht zu den Paßbohrungen (5) und auf der Mittellinie durch benachbarte Paßbohrungen Querbohrungen (6) vorgesehen sind, deren Durchmesser gleich dem Durchmesser der Paßbohrungen ist, und daß die Mutternteile (3) in die Quer- und/oder Paßbohrungen einsteckbar sind, und deren Querschnitt gleich dem Querschnitt der Quer- und Paßbohrungen ist.

2. System nach Anspruch I, dadurch gekennzeichnet, daß die Querbohrungen (6) in beiden möglichen und senkrecht zueinander verlaufenden – sich kreuzenden – Richtungen vorgesehen sind.

3. System nach Anspruch I oder 2, dadurch gekennzeichnet, daß die Aufnahmeteile (II) nach dem gleichen Prinzip mit Paß-und Querbohrungen (5,6) versehen sind, und daß die Dicke der Grundplatte (I) und der Aufnahmeteile(II) dem Rastermaß (Abstand der Paßbohrungen (5)) entspricht.

4. System nach einem der vorstehenden Ansprüche I bis 3, dadurch gekennzeichnet, daß die Querbohrungen (6) angrenzend an die Seiten der Grundplatte (I) als Passungen entsprechend den Paßbohrungen (5) ausgebildet sind.

5. System nach einem oder mehreren der vorstehenden Ansprüche, dadurch gekennzeichnet, daß Widerlager (2) mit einer Ansenkung (8) und einer Durchgangsbohrung (7) in die Quer- und/oder Paßbohrungen (5,6) einsteckbar sind, wobei der Querschnitt der Widerlager gleich dem Querschnitt der Quer- und Paßbohrungen ist.

6. System nach einem oder mehreren der vorstehenden Ansprüche, dadurch gekennzeichnet, daß die Widerlager (2) und die Mutternteile (3) an ihren Stirnflächen mit Aufnahmen (I0) für Werkzeuge versehen sind.

7. System nach einem oder mehreren der vorstehenden Ansprüche, dadurch gekennzeichnet, daß der Durchmesser der Quer- und Paßbohrungen (5 und 6) dem halben Rastermaß (Abstand zwischen den Paßbohrungen (5)) entspricht.

## Claims

1. System for the assembly of devices for fixing workpieces to machine tool tables in a clearly defined and reproducible position, with a base plate (1) mountable on the machine tool table, which is provided with fitting holes (5) arranged in regular coordinate spacings for fixing mounting parts (11) for the workpieces with the aid of fitting screws (4) and nut parts (3) receiving them, the mounting parts being provided with fitting holes having the same coordinate spacings as the base plate and positionable therein by means of the fitting screws, characterized in that cross holes (6) are provided in the base plate (1) in a plane at right angles to the fitting holes (5) and on the axis through adjacent fitting holes, the diameter of the cross holes being the same as that of the fitting holes and in that the nut parts (3) can be inserted in the cross and/or fitting holes and their cross-section is the same; as the cross-section of the cross and fitting holes.

2. System according to claim 1, characterized in that the cross holes (6) are located in both possible intersecting directions which are at right angles to one another.

3. System according to claims 1 or 2, characterized in that the mounting parts (11) are provided according to the same principle with fitting and cross holes (5, 6) and in that the thickness of the base plate (1) and the mounting parts (11) corresponds to the grid size (spacing of the fitting holes (5)).

4. System according to one of the preceding claims 1 to 3, characterized in that adjacent to the sides of the base plates (1), the cross holes (6) are constructed as fits corresponding to the fitting holes (5).

5. System according to one or more of the preceding claims, characterized in that abutments (2) provided with a countersinking (8) and a through- bore (7) can be inserted in the cross and/or fitting holes (5, 6) the abutment cross-section being the same as the cross-section of the cross and fitting holes.

6. System according to one or more of the preceding claims, characterized in that the abutments (2) and nut parts (3) are provided on their end faces with mounts (10) for the tools.

7. System according to one or more of the preceding claims, characterized in that the diameter of the cross and fitting holes (5, 6) corresponds to half the grid size (spacing between the fitting holes (5)).

## Revendications

1. Système de construction de dispositifs de serrage de pièces à usiner sur des tables de machines-outils dans une position définie et reproductible, avec une plaque de base (1), pouvant être placée sur la table de machine, qui présente des perçages d'ajustage (5) disposés à intervalles de coordonnées réguliers pour la fixation d'éléments de réception (11) pour les pièces à l'aide de vis d'ajustage (4) et de parties en écrou recevant celles-ci, sur lequel les éléments de réception sont pourvus de perçages d'ajustage disposés avec les mêmes intervalles de coordonnées que la plaque de base et sont positionnables au moyen des vis d'ajustage dans ceux-ci, caractérisé en ce qu'il est prévu dans la plaque de base (1) dans un plan perpendiculaire aux perçages d'ajustage (5) et sur la ligne médiane passant par des perçages d'ajustage voisins des perçages transversaux (6) dont le diamètre est égal au diamètre des perçages d'ajustage, et en ce que les parties en écrou (3) sont enfichables dans les perçages transversaux et/ou d'ajustage, et ont leur section égale à la section des perçages transversaux et d'ajustage.

2. Système selon la revendication 1, caractérisé en ce que les perçages transversaux (6) sont prévus dans deux directions possibles dirigées perpendiculairement l'une à l'autre pour se croiser.

3. Système selon la revendication 1 ou 2, caractérisé en ce que les éléments de réception (11) sont pourvus d'après le même principe de perçages d'ajustage et transversaux (5, 6) et en ce que l'épaisseur de la plaque de base (1) et des éléments de réception (11) correspond au pas du module (distance entre les trous d'ajustage (5)).

4. Système selon l'une des revendications 1 à 3, caractérisé en ce que les perçages transversaux (6) sont constitués près des côtés de la plaque de base (1) comme des ajustages correspondant aux perçages d'ajustage (5).

5. Système selon l'une ou plusieurs des revendications qui précèdent, caractérisé en ce que des butées (2) à cavité (8) et perçage de passage (7) sont enfonçables dans les perçages transversaux et/ou d'ajustage (5, 6), la section des butées étant égale à la section des perçages transversaux et d'ajustage.

6. Système selon l'une ou plusieurs des revendications qui précèdent, caractérisé en ce que les butées (2) et les parties en écrou (3) sont pourvues sur leurs faces frontales de logements (10) pour des outils.

7. Système selon l'une ou plusieurs des revendications qui précèdent, caractérisé en ce que le diamètre des perçages transversaux et d'ajustage (5 et 6) correspond à la demi-dimension du module (intervalle entre les perçages d'ajustage (5)).

Fig.1

Fig.2

Fig.3
(C-D)

Fig.4

Fig.5

Fig.6

Fig.7
(A-B)

Fig.8